Europäisches Patentamt

European Patent Office

Office européen des brevets

(19)

(11) **EP 1 145 946 A2**

(12) **EUROPÄISCHE PATENTANMELDUNG**

(43) Veröffentlichungstag:
 **17.10.2001 Patentblatt 2001/42**

(51) Int Cl.[7]: **B62L 3/00**, B62L 3/02,
 B62L 1/14, B60T 8/26

(21) Anmeldenummer: **01107355.8**

(22) Anmeldetag: **24.03.2001**

(84) Benannte Vertragsstaaten:
 **AT BE CH CY DE DK ES FI FR GB GR IE IT LI LU
 MC NL PT SE TR**
 Benannte Erstreckungsstaaten:
 **AL LT LV MK RO SI**

(30) Priorität: **11.04.2000 DE 10017867**

(71) Anmelder: **HANS HELMIG GmbH
 D-51491 Overath (DE)**

(72) Erfinder: **Lange, Karl-Heinz, Dipl.-Ing.
 74821 Mosbach (DE)**

(74) Vertreter: **Nau, Walter, Dipl.-Ing.
 Johann-Pullem-Strasse 8
 50999 Köln (DE)**

(54) **Fahrradbremse**

(57) Bekannte Fahrradbremsen weisen eine Vorrichtung zur Beeinflussung der Übertragungskraft auf, die eine Schraubenfeder beinhaltet. Diese Schraubenfeder wird bei Überschreiten einer bestimmten auf den Handbremshebel aufgebrachten Betätigungskraft zusammengedrückt. Dabei ist es aber dann so, dass aufgrund der progressiven Federsteifigkeitskennlinie von Schraubfedern die auf die Bremse übertragene Übertragungskraft bei zunehmender Erhöhung der Betätigungskraft am Bremshebel progressiv zunimmt. Dadurch ist eine sichere und kontrollierte Dosierung der Bremskraft an dem gebremsten Rad nicht möglich.

Erfindungsgemäß ist eine Steuervorrichtung (10) mit der degressiven Kraftübertragungskennlinie vorgesehen. Dadurch wird erreicht, dass bei zunehmender Erhöhung der Betätigungskraft am Bremshebel (3) gleichzeitig die auf die Bremse (15) übertragene Übertragungskraft und somit die auf das zu bremsende Rad einwirkende Bremskraft abnimmt. Somit ist eine kontrollierte Dosierung der Bremskraft möglich, da bei zunehmender Betätigungskraft die Bremskraft abnimmt.

FIG. 2

EP 1 145 946 A2

**Beschreibung**

Die Erfindung betrifft eine Betätigungseinrichtung für eine Bremse an einem Fahrrad, wobei die Betätigungseinrichtung einen Bremshebel und eine Kraftübertragungseinrichtung mit einem elastischen Element zur Beeinflussung der Übertragungskraft zu der Bremse aufweist.

Eine derartige Betätigungseinrichtung ist aus der DE- 196 34 432 A1 bekannt. Diese Betätigungseinrichtung weist eine Vorrichtung zur Beeinflussung der Übertragungskraft auf, die eine Schraubenfeder beinhaltet. Diese Schraubenfeder wird bei Überschreiten einer bestimmten auf den Handbremshebel aufgebrachten Betätigungskraft zusammengedrückt. Dabei ist das System so abgestimmt, dass der Fahrradfahrer zunächst mit dem Bremshebel eine bestimmte Bremskraft auf das zu bremsende Rad aufbringen kann, ohne dass die Schraubenfeder zusammengedrückt wird. Bei zunehmender Erhöhung der auf den Bremshebel einwirkenden Betätigungskraft wird ein Punkt erreicht, ab dem die Schraubenfeder dann zunehmend zusammengedrückt wird. Dabei ist es aber dann so, dass aufgrund der progressiven Federsteifigkeitskennlinie von Schraubfedern die auf die Bremse übertragene Übertragungskraft bei zunehmender Erhöhung der Betätigungskraft am Bremshebel progressiv zunimmt. Dadurch ist eine sichere und kontrollierte Dosierung der Bremskraft an dem gebremsten Rad nicht möglich.

Der Erfindung liegt die Aufgabe zugrunde, eine Betätigungseinrichtung für eine Bremse an einem Fahrrad bereitzustellen, die ein elastisches Element zur Beeinflussung der Übertragungskraft zu der Bremse aufweist, mit dem eine sichere und kontrollierte Dosierung der Bremskraft an dem gebremsten Rad möglich ist.

Diese Aufgabe wird dadurch gelöst, dass das elastische Element zur Beeinflussung der Übertragungskraft eine Steuervorrichtung mit der degressiven Kraftübertragungskennlinie ist. Dadurch wird erreicht, dass bei zunehmender Erhöhung der Betätigungskraft am Bremshebel gleichzeitig die auf die Bremse übertragene Übertragungskraft und somit die auf das zu bremsende Rad einwirkende Bremskraft abnimmt. Damit ist bei einer normalen Betätigung des Bremshebels eine kontrollierte Dosierung der Bremskraft möglich, da bei zunehmender Betätigungskraft die Bremskraft abnimmt. Dies ist insbesondere in dem Bremsbereich vorteilhaft, in dem das Rad infolge der einwirkenden Bremskraft kurz vor dem Zustand des Blockierens steht. In diesem Bereich bedeutet bei einem konventionellen System eine geringfügige Erhöhung des Betätigungskraft die schlagartige Einleitung des Blockierens, da die Bremskraft progressiv zunimmt, während dies durch die degressive Auslegung der Steuervorrichtung gemäß der Erfindung vermieden wird. Vorteilhaft ist das Gesamtsystem so abgestimmt, dass ein Blockieren des gebremsten Rades durch die entsprechend reduzierte Bremskraft nicht oder gerade erst bei Einstellung des maximalen Verstellweges des Handbremshebels eintritt. Dadurch ist sichergestellt, dass beim normalen Bremsbetrieb ein Blockieren des gebremsten Rades ausgeschlossen ist. Erst bei einer Gefahrbremsung, bei der instinktiv die maximal mögliche Kraft auf den Bremshebel aufgebracht wird, ist ein Blockieren des gebremsten Rades möglich. In einer solchen Situation rechnet aber entweder der Fahrradfahrer mit einem solchen Zustand oder aber nimmt diesen billigend in Kauf, um beispielsweise dem Aufprall auf ein Hindernis zu entgehen. Im Normalfall ist aber ein plötzlich auftretendes unbeabsichtigtes und unkontrollierbares Blockieren des gebremsten Rades ausgeschlossen. Dies trifft insbesondere für sogenannte Langarm- oder Kantilever-Bremsen zu, bei denen konstruktionsbedingt sehr hohe Bremskräfte auf das zu bremsende Rad übertragen werden können.

In Weiterbildung der Erfindung weist die Steuervorrichtung ein Tellerfeder-Paket auf. Tellerfedern weisen eine degressive Federsteifigkeitskennlinie auf, so dass mit solchen Federn die geforderte degressive Kraftübertragungskennlinie einstellbar ist. Im Rahmen der Erfindung sind auch andere beispielsweise hydraulische Steuervorrichtungen vorgesehen, die eine degressive Kraftübertragungskennlinie erzeugen.

In weiterer Ausgestaltung der Erfindung weist das Tellerfeder-Paket Tellerfedern mit gleichen oder ungleichen Federkennlinien auf, die in Reihe oder parallel geschaltet sind. Für eine Reihenschaltung gilt, dass sich die Gesamtfederkennlinie durch die Formel

$$\frac{1}{C_{Ges}} = \frac{1}{C_1} + \frac{1}{C_2} + ... + \frac{1}{C_n}$$

ergibt. Für eine Parallelschaltung gilt

$$C_{Ges} = C_1 + C_2 + ..... + C_n.$$

Durch entsprechendes Zusammenschalten von Tellerfedern ergeben sich große Variationsmöglichkeiten beim Aufbau von Federkennlinien und somit der degressiven Kraftübertragungskennlinie.

In weiterer Ausgestaltung der Erfindung ist der Druckkolben direkt in dem hohlzylindrischen Tragkörper geführt ist und das Tellerfeder-Paket stützt sich mit einer ersten Paketseite gegen eine Zylinderwandstirnfläche des Tragkörpers und mit einer zweiten Paketseite gegen eine an dem Druckkolben umlaufende Stützschulter ab. Diese Ausbildung ermöglicht einen sehr schlanken Aufbau der Steuervorrichtung.

In alternativer Ausgestaltung der Erfindung ist das Tellerfeder-Paket in dem hohlzylindrischen Tragkörper angeordnet und das Tellerfederpaket stützt sich dabei mit der ersten Paketseite gegen eine Grundplatte des Tragkörpers und mit der zweiten Paketseite gegen die an dem Druckkolben umlaufende Stützschulter ab.

Dabei ist in weiterer Ausgestaltung der Druckkolben mitsamt dem Tellerfeder-Paket vollständig in dem hohlzylindrischen Tragkörper angeordnet. Weiter ist der Druckkolben unter Zwischenschaltung des Tellerfeder-Pakets in dem hohlzylindrischen Tragkörper geführt. Diese Ausführung baut sehr kompakt und bietet die Möglichkeit der vollständigen Kapselung des Tellerfederpakets.

In Weiterbildung der Erfindung weist die Übertragungseinrichtung einen Bowdenzug und eine Bowdenzughülle auf, wobei der Bowdenzug die Steuervorrichtung durchdringt und die Bowdenzughülle einseitig oder beidseitig mit der Grundplatte und/oder dem Druckkolben zusammenwirkt. Somit ist die Steuervorrichtung problemlos an beliebiger Stelle in den Bowdenzug einbaubar, wobei aber besonders eine Anordnung direkt am/im Handbremshebel oder direkt an/in der Bremse vorgesehen ist. Im übrigen ist im Rahmen der Erfindung auch vorgesehen anstelle des Bowdenzugs und der Bowdenzughülle eine sonstige mechanische oder hydraulische Kraftübertragungseinrichtung von dem Handbremshebel zu der Bremse vorzusehen, in die die Steuervorrichtung dann entsprechend integriert ist.

Vorteilhafte Weiterbildungen der Erfindung sind der Zeichnungsbeschreibung zu entnehmen, in der in den Figuren dargestellte Ausführungsbeispiele der Erfindung näher beschrieben sind.

Es zeigen:

Figur 1:　eine Gesamtansicht der Betätigungseinrichtung mit Handbremshebel, Bowdenzug, Steuervorrichtung zur Beeinflussung der Übertragungskraft und Bremse,

Figur 2:　die Steuervorrichtung im Detail und

Figur 3:　eine Variante der Steuervorrichtung.

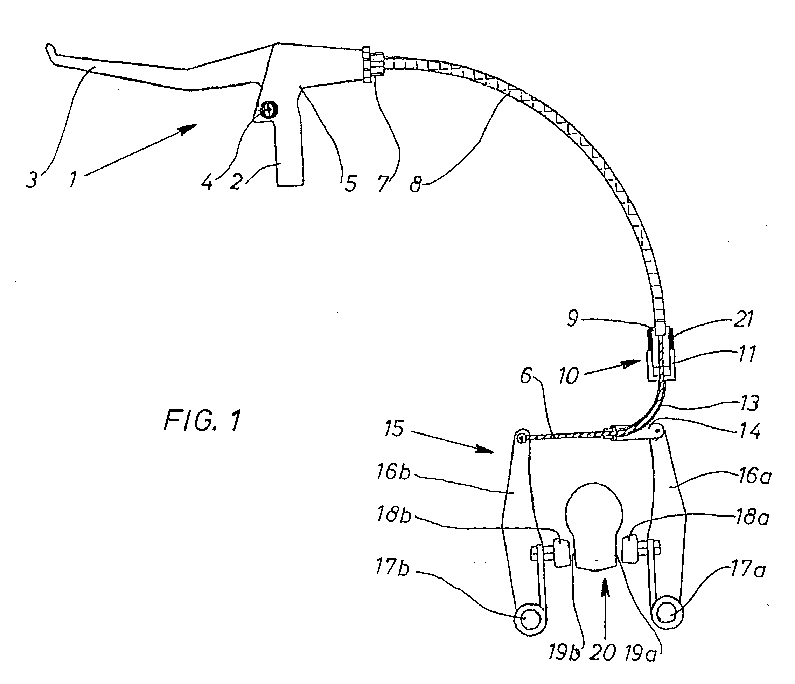

Bei der in Figur 1 dargestellten Gesamtansicht ist der Handbremshebel 1 mit einem Befestigungsteil 2 an einem Lenkrohr eines beliebigen Fahrrades festgelegt. Der Bremshebel 3 des Handbremshebels 1 ist mit einer Befestigungsschraube 4 um die so gebildete Befestigungsachse drehbar an dem Bremshebelgrundteil 5 festgelegt. An dem Bremshebel 3 ist - nicht sichtbar - ein Bowdenzug 6 befestigt, der durch eine an dem Bremshebelgrundteil 5 angeordnete Einstellvorrichtung 7 in eine sich an der Einstellvorrichtung 7 abstützende Bowdenzughülle 8 eingeführt ist. Mit der Einstellvorrichtung 7 kann die relative Lage der Bowdenzughülle 8 gegenüber dem Bowdenzug 6 eingestellt werden und dadurch die Bremse eingestellt werden.

Das der Einstellvorrichtung 7 gegenüberliegende Ende der Bowdenzughülle 8 stützt sich an einem Druckkolben 9 der erfindungsgemäßen Steuervorrichtung 10 ab. Der Bowdenzug 6 ist durch eine mittige Öffnung in dem Druckkolben 9 sowie durch einem Tragkörper 11, in dem der Druckkolben 9 axial bewegbar geführt ist, hindurchgeführt und wiederum durch eine mittige Öffnung in einer Grundplatte 12 des Tragkörpers 11 wieder aus der Steuervorrichtung 10 gegenüberliegend zu der Eintrittsseite an dem Druckkolben 9 herausgeführt. An der Grundplatte 12 stützt sich ein Umlenkrohr 13 ab, das an einem Hilfsarm 14 der als Kantilever-Bremse ausgebildeten Bremse 15 abgestützt ist. Dieser Hilfsarm 14 ist beweglich an einem ersten Bremsarm 16a befestigt, wobei der Bremsarm 16a mit einer Ringöffnung 17a auf einen Bolzen eines Gabelarms der Fahrradvorderradgabel aufgesteckt ist. Der zweite Bremsarm 16b ist entsprechend auf einem zweiten Bolzen des zweiten Gabelarms aufgesetzt. An diesen zweiten Bremsarm 16b ist analog zu dem Anlenkpunkt des Hilfsarms 14 an dem ersten Bremsarm 16a der Bowdenzug 6 angelenkt. Bei einer Betätigung des Bremshebels 3 werden folglich die Bremsarme 16a, 16b aufeinander zu bewegt und drücken die Bremsklötze 18a, 18b auf die gegenüberliegenden Schultern 19a, 19b der Vorderradfelge 20.

Bei einer Betätigung des Bremshebels 3 wird bis zum Ansprechen der Steuervorrichtung 10 die Bewegung des Bremshebels 3 direkt ohne eine Beeinflussung durch die Steuervorrichtung 10 in eine Bremsbewegung der Bremse 15, also ein Aufeinanderzubewegen der Bremsarme 16a, 16b umgesetzt. Nach Überschreiten des Ansprechpunktes wird die Steuervorrichtung 10 in der Form aktiv, dass ein Tellerfeder-Paket 21, das sich auf der Grundplatte 12 des Tragkörpers 11 und gegenüberliegend auf einer Stützschulter 22 des Druckkolbens 9 abstützt, zusammendrückt wird. Dadurch wird eine weitere Betätigungsbewegung des Bremshebels 3 nicht mehr linear auf die Bremse 15 übertragen sondern entsprechend der Federsteifigkeit des Tellerfeder-Pakets 21 nur degressiv. Dass heißt, bei zunehmender Bewegung des Bremshebels 3 wird die entsprechende Bewegung der Bremsarme 16a, 16b degressiv geringer.

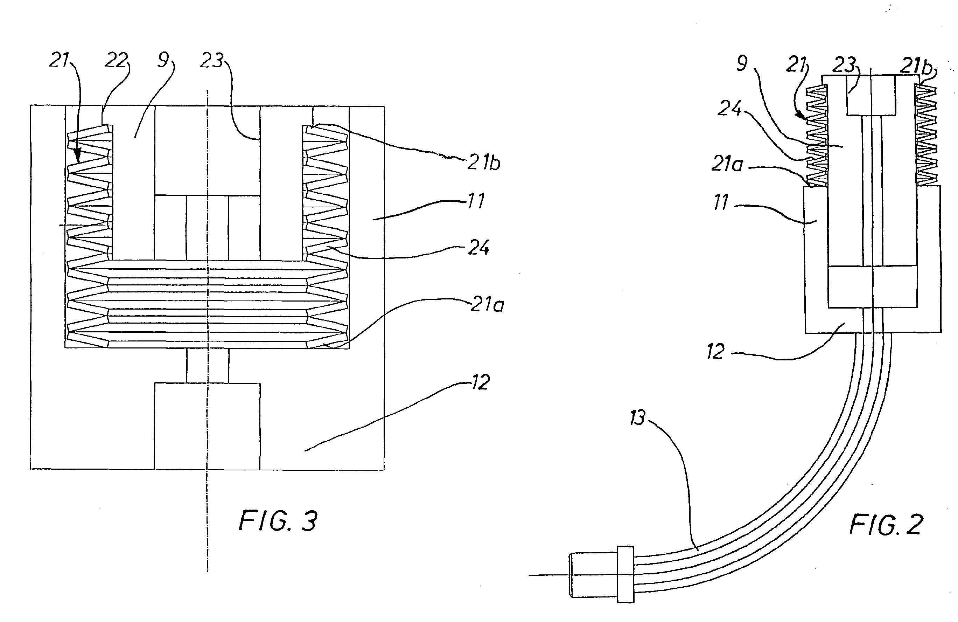

Figur 2 zeigt in einer vergrößerten Ausschnittsdarstellung die Steuervorrichtung 10 mit dem daran anschließenden Umlenkrohr 13 aus Figur 1. Dabei stützt sich das Tellerfeder-Paket 21 auf einer Zylinderwandstirnfläche des zylinderrohrförmig ausgebildeten Tragkörpers 11 ab und gegenüberliegend an einer Stützschulter 22 des Druckkolbens 9. In dem Druckkolben 9 ist eine kreiszylinderförmige Ausnehmung 23 eingearbeitet, in die die Bowdenzughülle 8 zur lagegenauen Fixierung einsetzbar ist. Der Druckkolben 9 ist direkt in dem zylinderrohrförmigen Tragkörper 11 geführt.

Im Unterschied zu dem Ausführungsbeispiel gemäß Figur 2 ist der Druckkolben 9 mitsamt dem Tellerfeder-Paket 21 bei dem Ausführungsbeispiel gemäß Figur 3 einerseits vollständig in den Tragkörper 11 eingesetzt und andererseits ist der Druckkolben 9 über das Tellerfeder-Paket 21 in dem wiederum zylinderförmig ausgebildeten Tragkörper 11 geführt. Zusätzlich kann der zwischen dem Druckkolben 9 und dem Tragkörper 11 zur Umgebung hin offene Bereich durch eine flexible Abdichtung abgedichtet sein, so dass eine wartungsfreie und gegen das Eindringen von Schmutz weitgehend gesicherte Steuervorrichtung 10 gegeben ist.

**Patentansprüche**

1.  Betätigungseinrichtung für eine Bremse an einem Fahrrad, wobei die Betätigungseinrichtung einen Bremshebel und eine Kraftübertragungseinrichtung mit einem elastischen Element zur Beeinflussung der Übertragungskraft zu der Bremse aufweist,
    *dadurch gekennzeichnet, dass* das elastische Element zur Beeinflussung der Übertragungskraft eine Steuervorrichtung (10) mit einer degressiven Kraftübertragungskennlinie ist.

2.  Betätigungsvorrichtung nach Anspruch 1,
    *dadurch gekennzeichnet, dass* die Steuervorrichtung (10) ein Tellerfeder-Paket (21) aufweist.

3.  Betätigungsvorrichtung nach Anspruch 2,
    *dadurch gekennzeichnet, dass* das Tellerfeder-Paket (21) Tellerfedern (24) mit gleichen oder ungleichen Federkennlinien aufweist, die in Reihe oder parallel geschaltet sind.

4.  Betätigungsvorrichtung nach einem der Patentansprüche 2 oder 3,
    *dadurch gekennzeichnet, dass* der Druckkolben (9) direkt in dem hohlzylindrischen Tragkörper (11) geführt ist und das Tellerfeder-Paket (21) sich mit einer ersten Paketseite (21a) gegen eine Zylinderwandstirnfläche des Tragkörpers (11) und mit einer zweiten Paketseite (21b) gegen eine an dem Druckkolben (9) umlaufende Stützschulter (22) abstützt.

5.  Betätigungsvorrichtung nach einem der Patentansprüche 2 oder 3,
    *dadurch gekennzeichnet, dass* das Tellerfeder-Paket (21) in einem hohlzylindrischen Tragkörper (11) angeordnet ist und dass das Tellerfeder-Paket (21) sich mit der ersten Paketseite (21a) gegen eine Grundplatte (12) des Tragkörpers (11) und mit der zweiten Paketseite (21b) gegen eine an dem Druckkolben (9) umlaufende Stützschulter (22) abstützt.

6.  Betätigungsvorrichtung nach Patentanspruch 5,
    *dadurch gekennzeichnet, dass* der Druckkolben (9) mitsamt dem Tellerfeder-Paket (21) vollständig in dem hohlzylindrischen Tragkörper (11) angeordnet ist.

7.  Betätigungsvorrichtung nach einem der Patentansprüche 5 oder 6,
    *dadurch gekennzeichnet, dass* der Druckkolben (9) unter Zwischenschaltung des Tellerfeder-Pakets (21) in dem hohlzylindrischen Tragkörper (11) geführt ist.

8.  Betätigungseinrichtung nach einem der vorherigen Ansprüche,
    *dadurch gekennzeichnet, dass* die Übertragungseinrichtung einen Bowdenzug (6) und eine Bowdenzughülle (8) aufweist, wobei der Bowdenzug (6) die Steuervorrichtung (10) durchdringt und die Bowdenzughülle (8) einseitig oder beidseitig mit der Grundplatte (12) und/oder dem Druckkolben (9) zusammenwirkt.

FIG. 1

21  22  9  23

21b

11

24

21a

12

FIG. 3

9  21  23  21b

24

21a

11

12

13

FIG. 2